# EUROPEAN PATENT SPECIFICATION

(11) **EP 2 444 198 B1**
(45) Date of publication and mention of the grant of the patent: **03.04.2013**
(21) Application number: 11185496.4
(22) Date of filing: 17.10.2011
(51) Int. Cl.: B23P 19/08, B25B 27/00, F16L 21/03

(54) **System for the insertion of a gasket in the bell joint of a pipe in plastic material and for the simultaneous control of the gasket position**
System zum Einsetzen eines Dichtringes in der Muffe eines Kunststoffrohres sowie zur gleichzeitigen Überprüfung der Position des Dichtrings
Système pour l'insertion d'une bague d'étanchéité dans le manchon d'un tuyau en matière plastique et pour le contrôle simultané du positionnement de ladite bague

(30) Priority: 22.10.2010 IT RA20100030
(43) Date of publication of application: 25.04.2012
(73) Proprietor: IPM S.R.L., 48022 Lugo (Ravenna) (IT)
(72) Inventor: Argnani, Claudio, 48022 LUGO (RAVENNA) (IT)
(74) Representative: Petruzziello, Aldo

(56) References cited:
- EP-A1- 0 808 686
- EP-A2- 0 137 907
- FR-A- 1 448 699
- US-A- 5 083 354

## Description

In the state of the art the sealing gasket is often inserted in the bell joints of pipes in plastic material before their packing and/or packaging.

This insertion consists of a series of operations, normally comprising the attachment of the end of the pipe wherein the bell joint is present, the positioning of the gasket, taken from a magazine, in a frontal and coaxial position to the bell, of a step of actual insertion by means of a series of mainly axial movements of appropriate manipulator devices.

It may occur in some cases that the gasket, which is a flexible member, is not positioned correctly in its seat of the bell, so that the pipe has to be rejected before packing. If this latter operation is performed manually, it is the same operator who intervenes and takes action, via a visual control. If instead this packaging is automatic, it is necessary, in order to avoid the risk of packing of pipes to be rejected, for an operation of automatic control to be performed in the actual production line.

Systems currently exist for control, positioned between the operations of gasket insertion and pipes packaging, adding therefore a step to the production line with additional costs and relative times of performance, for positioning and moving.

US 5083354 discloses a device (16) for seating seals (6) automatically in the grooves (14) afforded by the sockets (3) of plastic pipes (4) comprises a straight tubular element (1) offered immediately adjacent to and in alignment with the pipe socket (3) and serving to support and position a seal (6) of outer diameter greater than the internal diameter of the socket, a plunger (7) capable of sliding movement internally both of the tubular element and of the socket, by which a seal positioned in the tubular element is inserted into the groove (14), and actuators (10) by which the plunger is reciprocated automatically.

US 5083354 thus discloses a system of insertion of a main sealing gasket in an appropriate seat of a bell joint of a pipe in plastic material having an axis, comprising appropriate first and second manipulators suitable for performing a step of insertion of the main sealing gasket.

The object of the present invention is that of eliminating and/or reducing these times and costs, performing as an innovative element the operation of automatic control simultaneously, and in any case within the same production step, to the operation of gasket insertion in the bell seat.

A further object of the present invention is that of providing a system able to perform the operation of automatic control within the same production step of gasket insertion in the bell seat.

These objects are achieved in accordance with the invention with the features listed in the annexed independent claims 1 and 8.

Advantageous embodiments of the invention are disclosed by the dependent claims.

The object of the present invention is a sequence of operations and of devices dedicated to the performance thereof and aimed at the simultaneous execution of the operations of insertion and of control, as above. This applies even if the operation of insertion in itself makes use of devices and movements similar in certain respects to those already currently used, and even if the control operation is performed by creating inside the bell and the pipe a pressurised chamber, whereof the value is measured, to check whether the positioning of the gasket in its seat exists and is correct. The present invention comprises therefore a sequence of operations consisting first of the blocking of the end of the pipe where the bell is located and of the positioning of the gasket, coming from an appropriate magazine, in front of the end of the bell and coaxial thereto, then of the introduction in the pipe of a plug provided with gasket able to form a seal on the internal diameter of the pipe itself, with appropriate axial movement having bell-pipe direction and passing inside the previously positioned gasket; subsequently of the introduction of the gasket of the bell, with appropriate positioner able to grip its normal section, via a coaxial sleeve and with mainly axial movement of bell-pipe direction from the original positioning as far as the appropriate seat in the bell; of a rotatory movement of the previous positioner, around one of its longitudinal axes, in such a way that one of its appendages, off-centre in relation to the axis of the motion itself, pushing the gasket into the seat of the bell, perfects insertion thereof; then of the movement of a coaxial cylindrical plug, of bell-pipe direction, which, starting from an external position, contributes in a first step, with its front end appropriately shaped, preferably like a slice of salami or with tilted plane, to completing the insertion and the positioning of the gasket in its seat and in a second final step, inserting with its cylindrical surface of appropriate diameter inside the gasket, to form a seal with it, in the hypothesis that the latter is inserted in its seat and is correctly positioned.

On conclusion of the movements of the aforementioned sequence (cycle of insertion of the sealing gasket) the two gaskets present therefore form a seal, the first against the inner surface of the pipe and the second, which is that whereof the positioning has to be controlled, externally against its seat in the bell and internally against the support plug, In this way a closed chamber has been formed inside whereof air is blown in programmed mode. If the chamber is effectively closed and therefore the gasket of the bell is correctly positioned, a certain pressure is achieved in a certain time. The latter actuates a checking device which commands in turn a mechanism of feeding of the pipe in the automatic packaging line. If this does not occur due to lack of the right pressure in the prefixed time, it instead commands the feeding of the pipe on a reject line.

Having ended the aforesaid checking, the cycle breaks up with movements opposite to the previous ones, in terms of sequence and direction, up to a new position of start of cycle of insertion of the gasket.

These and further features and advantages of the present invention will be made clearer by the following detailed description of an embodiment, illustrated by way of a non-limiting example.
Fig. 1 shows the axial section of the device in position of cycle start, with pipe blocked and gasket in position of insertion.
Fig. 2 shows the axial section of the device, after the axial movement of the plug which carries the sealing gasket on the inner wall of the pipe.
Fig. 3 shows the axial section of the device, after the movements of the mechanism of insertion of the gasket in the bell.
Fig. 4 shows the axial section of the device at the end of its operational sequence, with the closure of the pressurised chamber for the control and before the start of the steps of breaking-up for a new cycle.

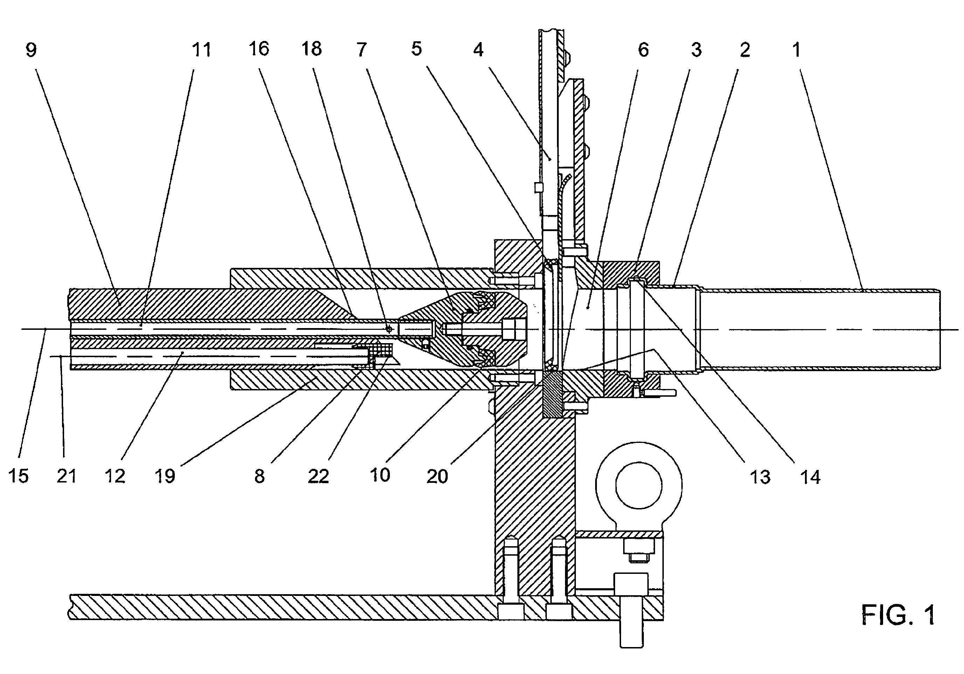

The cycle starts (Fig. 1) with the pipe (1) blocked at its bell joint (2), by means of a system of clamps (3). Via a hopper (4) the gasket of the bell (5), taken from a storage magazine (not shown in the drawing), is positioned on the cylindrical surface of a lower sleeve (20), with which the hopper (4) ends, in such a way that the same is approximately coaxial with the pipe (1), having axis (15). All the other significant mobile members of the mechanism (7, 8 and 9), hereinafter also defined as manipulators, are stopped at backward end of travel, as illustrated, and situated on the opposite side of the hopper (4) and of the gasket (5), in relation to the pipe-bell (1, 2).

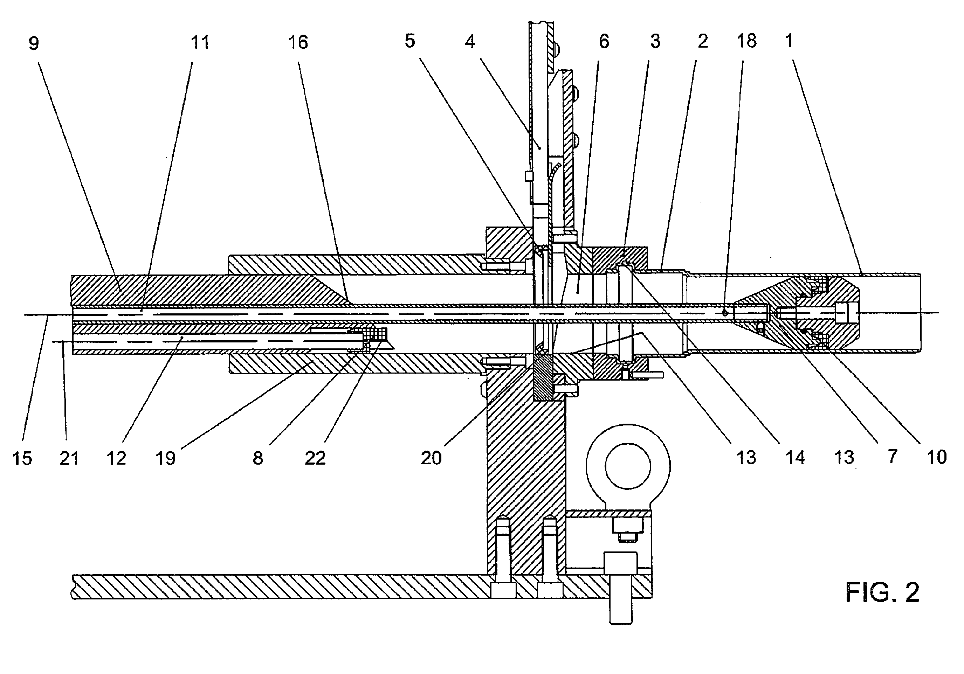

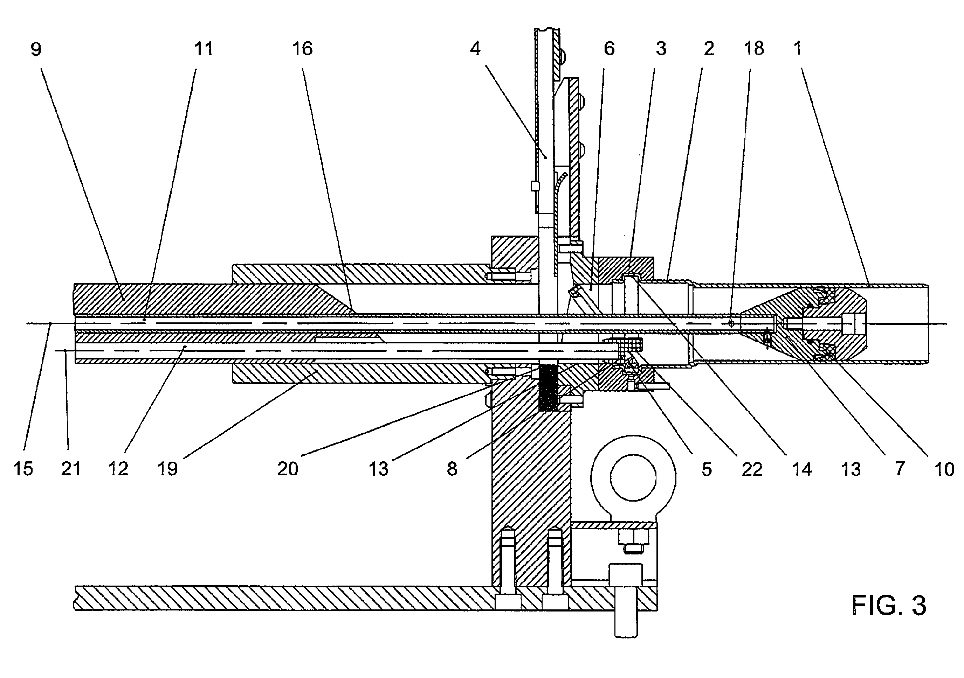

Subsequently the assembly made up of a plug (7), which supports the gasket (10) and is actuated and supported by the central stem (11), performs its entire forward travel from the position of Fig. 1 to that of Fig. 2, passing inside the gasket (5) and an internally cylindrical sleeve (6), in such a way that the gasket (10) forms a seal against the cylindrical inner surface of the pipe (1). The members (8) and (9) remain in the previous position (backward end of travel). In succession the manipulator (8) of the gasket (5), cantilever supported and actuated by the stem (12), having such as shape as to interact with the gasket at its lower cross section both on the inner side and on the right lateral side, in relation to the drawings, performs an axial movement towards the pipe, drawing the gasket onto the lower cylindrical surface (13) of the sleeve (6), from the position of the sleeve (20) and relative hopper (4) as far as its seat (14) in the bell (2) (see Fig. 3).

In order to complete the insertion of the section of the gasket (5) in its seat (14) the manipulator (8), at forward end of travel, performs a half turn around one of its longitudinal axes (21), in such a way that one of its appropriate appendages (22), off-centre in relation to the axis of the motion itself, pushes the gasket into its seat of the bell (14) and perfects insertion thereof.

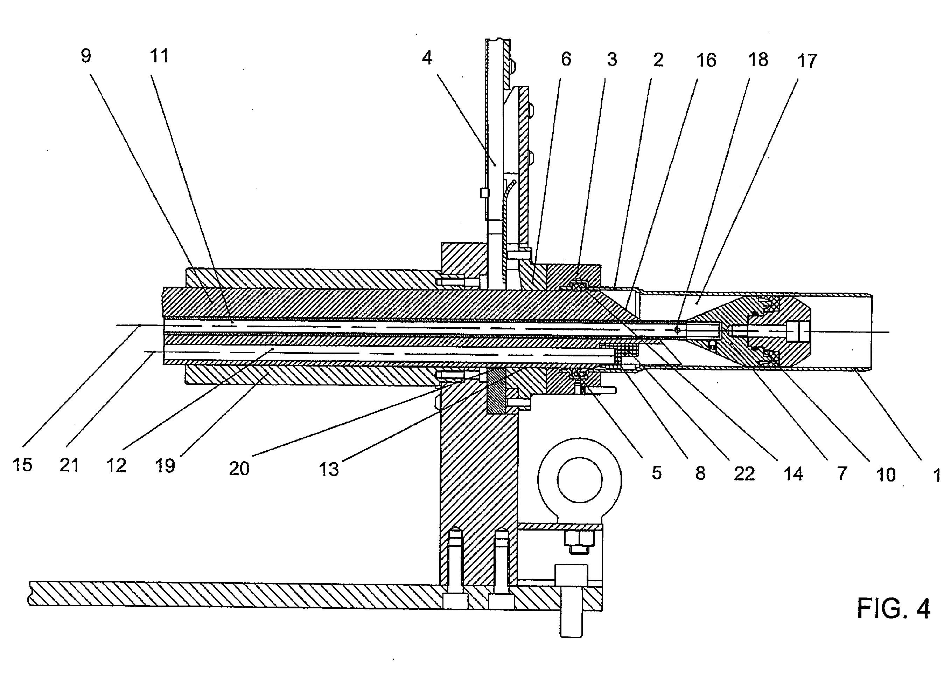

In succession the plug (9), coaxial with the axis (15) of the pipe, cylindrical and of diameter corresponding to that of the sleeve (19), coaxial with the pipe and situated on the opposite side of the same in relation to the hopper (4), performs its forward travel (from left to right in Fig. 3) therefore completing the insertion of the gasket (5) in its seat (14), thanks both to the shape of its front surface (16), slice of salami or tilted plane (decreasing in the direction of the motion of work), and to its diameter, which is such as to create friction against the inner wall of the gasket itself. Moreover in its position of forward end of travel (see Fig. 4) the cylindrical surface of the plug (9) adheres over an entire circumferential strip with the inner surface of the gasket (5), wherein its sealing members are shaped: a seal externally is thus formed between gasket (5) and seat of the bell (14) and internally between gasket and plug (9).

In the layout shown in Fig. 4 a closed chamber (17) is therefore defined, bordered by the gaskets (10) and (5), by the inner wall of the pipe and of the bell placed between them, by the plugs (7) and (9) and by the central stem (11).

After the closure of the above chamber, through the hole (18) of the stem (11) air is fed into the chamber (17), so as to create a certain pressure in a certain time. On reaching this pressure an appropriate instrument compares the pressure with the reference value. In the case of correspondence, the seal of the gasket is checked indirectly, more particularly of that (5) of the bell, certifying consequently its presence and the correct positioning and mounting in the seat: the pipe is then sent to the subsequent working step (packaging).

If the previous check is not positive, the gasket (5) is not in any case positioned correctly and the pipe is rejected from the production line.

In practice, the coaxial mounting of an additional plug 7, with relative gasket 10, on the plug 9 intended for insertion of the gasket 5, allows the closed chamber 17 to be created for the control of the pressure simultaneously to the step of insertion of the sealing gasket 5, thus reducing the production times.

The members that perform the aforesaid cycle can be different from those indicated in the previous drawings, provided they correspond with the invention according to the attached claims. More particularly the gasket (10) in the pipe and that (5) in the bell can have different working modes and shapes. The manipulator (8) can have different areas of grip on the gasket and development, and also a different positioning on the circumference, in relation to the lower point. Moreover the rotation at end of travel of the appendage (22), at the seat (14) of the gasket (5), can be missing or different. The plug (9) may also have a front surface (16) of different shape from that indicated in Fig. 4, which is essentially like a slice of salami or with tilted plane, decreasing in the direction of the motion of work.

## Claims

1. System of insertion of a main sealing gasket (5) in an appropriate seat (14) of a bell joint (2) of a pipe (1) in plastic material having an axis (15), comprising appropriate first and second mobile manipulators (7,9,8) suitable for performing a step of insertion of the main sealing gasket (5) and a step of control of the correct positioning of said main sealing gasket (5), the latter step being performed by checking the existence of a predefined pressure inside an appropriate closed chamber (17) created in the cycle of insertion of main sealing the gasket (5), **characterised in that** said closed chamber (17) is bordered
i) by said first manipulator (7) in the form of a first plug (7) with a further relative sealing gasket (10) acting on the inner wall of a section of the pipe (1), said first manipulator (7) being adapted to perform forward travel therefore passing inside the main sealing gasket (5);
ii) by said second manipulator including
a further manipulator (8) which pushes the main sealing gasket (5) into its seat (14) of the bell (2) is and which and
a second plug (9) which is adapted to perform forward travel therefore completing the insertion of the main sealing gasket (5) into its seat (14), and which, in its position of forward end at travel, supports the inner of said main sealing gasket (5), whose outer surface acts in turn against the seat (14) of the bell, thus forming a seal externally between main sealing gasket (5) and seat (14) of the bell (2) and internally between main sealing gasket (5) and plug (9), and
iii) by the portion of the pipe (1) and of the bell (2) comprised axially between the aforesaid two gaskets (5, 10),
said two plugs (7,9) being coaxially mounted on and connected by a central stem (11) so that the two mentioned steps of insertion of the main sealing gasket (5) and of control of the correct positioning of said main sealing gasket (5) are practically simultaneous.

2. System according to claim 1 wherein the second plug (9) is of cylindrical shape and coaxial to the pipe (1), and has the front surface, in relation to the movement of insertion in the main sealing gasket (5), shaped in such a way as to facilitate and complete the gradual introduction and the positioning of the main sealing gasket (5) in its seat (74) in the bell (2).

3. System according to claim 1 or 2 wherein said stem (11) of said two plugs (7,9) has a hole (18) suitable for feeding air into the chamber (17), so as to form a certain pressure in a certain time.

4. System according to any one of the previous claims wherein the second plug (9) has a front surface (16) with such a shape as to create friction against the inner wall of the main sealing gasket (5), preferably shaped like a slice of salami or with tilted plane.

5. System according to any one of the previous claims further comprising clamps (3) suitable for blocking said pipe (1) at its bell joint (2); a hopper (4) via which the main sealing gasket (5) of the bell, taken from a storage magazine, is positioned on the cylindrical surface of a lower sleeve (20), with which the hopper (4) ends, in such a way that the same is approximately coaxial with the pipe (1) having axis (15); an internally cylindrical sleeve (6) provided with a lower cylindrical surface (13) and placed adjacent to said lower sleeve (20).

6. System according to any one of the previous claims wherein the said further manipulator (8) of the main sealing gasket (5) is a gripping and drive device actuated by a further stem (12) and is suitable for drawing the main sealing gasket (5) onto the lower cylindrical surface (13) of the sleeve (6), from the position of the sleeve (20) and relative hopper (4) as far as its seat (14) in the bell (2).

7. System according to any one of the previous claims wherein said further manipulator (8) is a device for gripping and driving of the main sealing gasket (5), also suitable for performing, at the end of the axial rectilinear motion, a further rotatory movement around one of its longitudinal axes (21), in such a way that one of its appropriate appendages (22), off-centre in relation to the axis of the motion itself, pushes the main sealing gasket (5) into the seat (14) of the bell (2) so as to perfect insertion.

8. Process for inserting a main sealing gasket (5) in an appropriate seat (14) of a bell joint (2) of a pipe (1) in plastic material and for checking simultaneously the correct positioning of said main sealing gasket (5) by means of the use of the system as defined in the previous claims 1-7, comprising a step of insertion of the main sealing gasket (5), performed simultaneously to a step of control of the correct positioning of said main sealing gasket (5), the latter step being performed by checking the existence of a predefined pressure inside an appropriate closed chamber (17), created in the cycle of insertion of the gasket, and bordered by the further relative sealing gasket (10) of the first plug (7) acting on the inner wall of a section of the pipe (1), by the main sealing gasket (5), by the inner wall of the pipe and of the bell placed between them, and by the plugs (7) and (9) connected by a central stem (11).

9. Process according to claim 8 wherein the step of control of the correct positioning of said main sealing gasket (5) is performed by means of feeding in said closed chamber (17) of air from a hole (18) of the central stem (11) which connects and supports the two plugs (7,9), with a predetermined flow rate and for a predetermined time.

10. Process according to claim 9 wherein said step of insertion of the main sealing gasket (5) comprises the following steps of
- blocking the pipe (1) and positioning, coaxially to the same, the main sealing gasket (5) in front of the edge of the bell (2); said further relative sealing
- introducing in the pipe (1) the first plug (7) provided with said further relative sealing gasket (10) able to form a seal on the internal diameter of the pipe (1) itself, with appropriate axial rectilinear movement having bell-pipe direction and passing inside the previously positioned main sealing gasket (5);
- inserting the main sealing gasket (5) in the seat (14) of the bell with axial rectilinear movement, inside of a cylindrical sleeve (6), in bell-pipe direction, by an appropriate appendage (22) of the further manipulator (8); able to grasp a portion of circumferential section thereof;
- moving axially the second plug (9), which is of cylindrical shape and coaxial to the pipe, in bell-pipe direction, from an original external position so as to insert with its outer surface, of appropriate diameter, inside the main sealing gasket (5), determining, if the same is correctly positioned, its seal against the outer surface of the seat (14) of the bell (2) and completing in this way the closure of the chamber (17).

## Patentansprüche

1. System zum Einsetzen eines Hauptdichtungsrings (5) in einem zweckdienlichen Sitz (14) einer Muffe (2) eines Kunststoffrohrs (1) mit einer Achse (15), umfassend zweckdienliche erste und zweite bewegliche Manipulatoren (7, 9, 8), die zum Durchführen eines ersten Schritts des Einsetzen des Hauptdichtungsrings (5) und eines Schritts des Überprüfens der korrekten Position des Hauptdichtungsrings (5) geeignet sind, wobei der letztere Schritt durch Überprüfen des Vorhandenseins eines vorgegebenen Drucks innerhalb einer zweckdienlichen geschlossenen Kammer (17) durchgeführt wird, die in dem Zyklus des Einsetzens des Hauptdichtungsrings (5) erzeugt wird, **dadurch gekennzeichnet, dass** die geschlossene Kammer (17) begrenzt ist durch:
i) den ersten Manipulator (7) in der Form eines ersten Stopfens (7) mit einem weiteren Dichtungsring (10), der auf die Innenwand eines Teilabschnitts des Rohrs (1) einwirkt, wobei der erste Manipulator (7) dazu geeignet ist, einen Vorwärtslauf durchzuführen und daher in den Hauptdichtungsring (5) durchzulaufen,
ii) den zweiten Manipulator, enthaltend
einen weiteren Manipulator (8), der den Hauptdichtungsring (5) in seinen Sitz (14) der Muffe (2) drückt, und einen zweiten Stopfen (9), der dazu geeignet ist, den Vorwärtslauf durchzuführen und daher das Einsetzen des Hauptdichtungsrings (5) in seinen Sitz (14) vervollständigt, und der in seiner Position des Endes des Vorwärtslaufs die Innenfläche des Hauptdichtungsrings (5) stützt, dessen Außenfläche wiederum auf den Sitz (14) der Muffe einwirkt, wodurch eine Abdichtung außerhalb zwischen Hauptabdichtungsring (5) und Sitz (14) der Muffe (2) und innerhalb zwischen Hauptdichtungsring (5) und Stopfen (9) ausgebildet ist, und
iii) den Abschnitt des Rohrs (1) und der Muffe (2), der axial zwischen den oben angegebenen zwei Dichtungsringen (5, 10) enthalten ist,
wobei die zwei Stopfen (7, 9) koaxial angebracht und durch einen mittigen Schaft (11) verbunden sind, sodass die zwei angegebenen Schritte des Einsetzens des Hauptdichtungsrings (5) und des Überprüfens der korrekten Positionierung des Hauptdichtungsrings (5) praktisch gleichzeitig stattfinden.

2. System nach Anspruch 1, wobei der zweite Stopfen (9) zylindrisch und koaxial zu dem Rohr (1) ist und die Vorderfläche in Bezug zur Einsetzbewegung in den Hauptdichtring (5) derart geformt ist, dass sie das allmähliche Einführen und die Positionierung des Hauptdichtrings (5) in seinen Sitz (14) in der Muffe (2) erleichtert und vervollständigt.

3. System nach einem der Ansprüche 1 oder 2, wobei der Schaft (11) der zwei Stopfen (7, 9) ein Loch (18) aufweist, das zum Zuführen von Luft in die Kammer (17) zum Aufbauen eines bestimmten Drucks in einer bestimmten Zeit geeignet ist.

4. System nach einem der vorhergehenden Ansprüche, wobei der zweite Stopfen (9) eine Vorderfläche (16) mit einer Form zum Erzeugen von Reibung an der Innenwand des Hauptdichtungsrings (5) aufweist, bevorzugt in Salamischeibenform oder mit gekippter Ebene.

5. System nach einem der vorhergehenden Ansprüche, ferner umfassend Klammern (3), die zum Blockieren des Rohrs (1) an der Muffe (2) geeignet sind; einen Schacht (4), über den der Hauptdichtungsring (5) der Muffe, der einem Speichermagazin entnommen ist, auf der mittigen Oberfläche einer unteren Hülse (20) positioniert wird, mit der der Schacht (4) endet, sodass derselbe ungefähr koaxial mit dem Rohr (1) mit Achse (15) ist; eine innere zylindrische Hülse (6), die mit einer unteren zylindrischen Oberfläche (13) versehen ist und der unteren Hülse (20) benachbart angeordnet ist.

6. System nach einem der vorhergehenden Ansprüche, wobei der weitere Manipulator (8) des Hauptdichtungsrings (5) eine Greif- und Antriebsvorrichtung ist, die durch ein weiteres System (12) betätigt ist, und zum Ziehen des Hauptdichtungsrings (5) auf die untere zylindrische Oberfläche (13) der Hülse (6), von der Position der Hülse (20) und des relativen Schachts (4) bis zu seinem Sitz (14) in der Muffe (2) geeignet ist.

7. System nach einem der vorhergehenden Ansprüche, wobei der weitere Manipulator (8) eine Vorrichtung zum Greifen und Antreiben des Hauptdichtungsrings (5) ist, die außerdem zum Ausführen, am Ende der axialen geradlinigen Bewegung, einer weiteren Drehbewegung um eine ihrer Längsachsen (21) geeignet ist, sodass eine ihrer zweckdienlichen Ansätze (22), exzentrisch in Bezug zur Achse der Bewegung selbst, den Hauptdichtungsring (5) in den Sitz (14) der Muffe (2) drückt, sodass er perfekt eingesetzt ist.

8. Verfahren zum Einsetzen eines Hauptdichtungsrings (5) in einen zweckdienlichen Sitz (14) einer Muffe (2) eines Kunststoffrohrs (1) und zum gleichzeitigen Überprüfen der Position des Hauptdichtungsrings (5) mittels des Systems wie in den vorhergehenden Ansprüchen 1 bis 7 definiert, umfassend einen Schritt des Einsetzens des Hauptdichtungsrings (5), der gleichzeitig mit einem Schritt des Überprüfens der korrekten Positionierung des Hauptdichtungsrings (5) ausgeführt wird, wobei der letztere Schritt durch Überprüfen des Vorhandenseins eines bestimmten Drucks innerhalb einer zweckdienlichen geschlossenen Kammer (17) ausgeführt wird, welche in dem Zyklus des Einsetzens des Dichtungsrings erzeugt wird und durch den weiteren relativen Dichtungsring (10) des ersten Stopfens (7), der auf die Innenwand eines Teilabschnitts des Rohrs (1) einwirkt, durch den Hauptdichtungsring (5), durch die Innenwand des Rohrs und der Muffe, die dazwischen angeordnet ist, und durch die Stopfen (7) und (9) begrenzt ist, welche durch einen mittigen Schaft (11) verbunden sind.

9. Verfahren nach Anspruch 8, wobei der Schritt des Überprüfens der korrekten Positionierung des Hauptdichtungsrings (5) mittels Zuführen von Luft in die geschlossene Kammer (17) von einem Loch (18) des mittigen Schafts (11), der die zwei Stopfen (7, 9) verbindet und stützt, mit einer vorgegebenen Strömungsgeschwindigkeit und über einen vorgegebenen Zeitraum hinweg durchgeführt wird.

10. Verfahren nach Anspruch 9, wobei der Schritt des Einsetzens des Hauptdichtungsrings (5) folgende Schritte umfasst:
- Blockieren des Rohrs (1) und Positionieren des Hauptdichtungsrings (5) koaxial dazu vor der Kante der Muffe (2);
- Einführen des ersten Stopfens (7), der mit dem weiteren relativen Dichtungsring (10) versehen ist, welcher dazu imstande ist, eine Abdichtung am Innendurchmesser des Rohrs (1) selbst auszubilden, mit zweckdienlicher axialer geradliniger Bewegung in Muffen-Rohr-Richtung in das Rohr (1) und Durchführen innerhalb des vorher positionierten Hauptdichtungsrings (5);
- Einsetzen des Hauptdichtungsrings (5) in den Sitz (14) der Muffe mit axialer geradliniger Bewegung innerhalb einer zylindrischen Hülse (6) in Muffen-Rohr-Richtung durch einen zweckdienlichen Ansatz (22) des weiteren Manipulators (8), der dazu imstande ist, einen Abschnitt eines umfänglichen Teilabschnitts davon zu greifen;
- axiales Bewegen des zweiten Stopfens (9), der zylindrisch und koaxial zu dem Rohr ist, in Muffen-Rohr-Richtung aus einer ursprünglichen externen Position zum Einführen mit seiner Außenfläche mit zweckdienlichem Durchmesser innerhalb des Hauptdichtungsrings (5), Bestimmen, ob derselbe mit seiner Abdichtung an der Außenfläche des Sitzes (14) der Muffe (2) korrekt positioniert ist, und Vervollständigen des Verschlusses der Kammer (17) auf diese Art und Weise.

## Revendications

1. Système d'insertion d'un joint d'étanchéité principal (5) dans un siège approprié (14) d'un joint à godet (2) d'un tuyau (1) en matériau plastique possédant un axe (15), comprenant des premier et second manipulateurs mobiles appropriés (7, 9, 8) aptes à réaliser une étape d'insertion du joint d'étanchéité principal (5) et une étape de contrôle du positionnement correct dudit joint d'étanchéité principal (5), cette dernière étape étant réalisée en contrôlant la présence d'une pression prédéfinie dans une chambre fermée appropriée (17) créée dans le cycle d'insertion du joint d'étanchéité principal (5), **caractérisé en ce que** ladite chambre fermée (17) est bordée
i) par ledit premier manipulateur (7) sous forme d'une première prise (7) présentant un autre joint d'étanchéité relatif (10) agissant sur la paroi intérieure d'une section du tuyau (1), ledit premier manipulateur (7) étant apte à exécuter un déplacement vers l'avant avant de passer à l'intérieur du joint d'étanchéité principal (5),
ii) par ledit second manipulateur, y compris
un autre manipulateur (8) qui pousse le joint d'étanchéité principal (5) dans son siège (14) du godet (2),
une seconde prise (9) qui est apte à exécuter un déplacement vers l'avant en complétant ainsi l'insertion du joint d'étanchéité principal (5) dans son siège (14) et qui, dans sa position d'extrémité avant de déplacement, supporte la surface intérieure dudit joint d'étanchéité principal (5) dont la surface extérieure agit à son tour contre le siège (14) du godet en formant ainsi un joint à l'extérieur entre le joint d'étanchéité principal (5) et le siège (14) du godet (2) et à l'intérieur entre le joint d'étanchéité principal (5) et la prise (9), et
iii) par la partie du tuyau (1) et du godet (2) comprise axialement entre les deux joints précités (5, 10),
lesdites deux prises (7, 9) étant coaxialement montées et connectées par une tige centrale (11) de manière à ce que les deux étapes d'insertion mentionnées du joint d'étanchéité principal (5) et de contrôle du positionnement correct dudit joint d'étanchéité principal (5) soient pratiquement simultanées.

2. Système selon la revendication 1, dans lequel la seconde prise (9) est de forme cylindrique et coaxiale au tuyau (1) et a sa face frontale, en relation avec le mouvement d'insertion dans le joint d'étanchéité principal (5), façonnée de manière à faciliter et à compléter l'introduction graduelle et le positionnement du joint d'étanchéité principal (5) dans son siège (14) dans le godet (2).

3. Système selon la revendication 1 ou 2, dans lequel ladite tige (11) desdites deux prises (7, 9) est percée d'un trou (18) apte à apporter de l'air dans la chambre (17) de manière à générer une certaine pression en un certain temps.

4. Système selon l'une quelconque des revendications précédentes, dans lequel la seconde prise (9) a une surface frontale (16) ayant une forme de nature à créer une friction contre la paroi intérieure du joint d'étanchéité principal (5), de préférence façonnée en forme de tranche de saucisson ou avec un plan incliné.

5. Système selon l'une quelconque des revendications précédentes, comprenant en outre des attaches (3) aptes à bloquer ledit tuyau (1) au niveau de son joint à godet (2) ; un entonnoir (4) via lequel le joint d'étanchéité principal (5) du godet, prélevé dans un magasin de stockage, est positionné sur la surface cylindrique d'un manchon inférieur (20) par lequel l'entonnoir (4) se termine de manière à ce que ce dernier soit approximativement coaxial au tuyau (1) possédant un axe (15) ; un manchon cylindrique à l'intérieur (6) présentant une surface cylindrique inférieure (13) et placé près dudit manchon inférieur (20).

6. Système selon l'une quelconque des revendications précédentes, dans lequel ledit autre manipulateur (8) du joint d'étanchéité principal (5) est un dispositif de saisie et de commande actionné par un autre système (12) et est apte à tirer le joint d'étanchéité principal (5) sur la surface cylindrique inférieure (13) du manchon (6) depuis la position du manchon (20) et l'entonnoir relatif (4) aussi loin que son siège (14) dans le godet (2).

7. Système selon l'une quelconque des revendications précédentes, dans lequel ledit autre manipulateur (8) est un dispositif de saisie et de commande du joint d'étanchéité principal (5) également apte à exécuter, à la fin du mouvement axial rectiligne, un autre mouvement rotatoire autour d'un de ses axes longitudinaux (21) de manière à ce qu'un de ses appendices adaptés (22), décentré par rapport à l'axe du mouvement lui-même, pousse le joint d'étanchéité principal (5) dans le siège (14) du godet (2) jusqu'à une insertion parfaite.

8. Procédé d'insertion d'un joint d'étanchéité principal (5) dans un siège approprié (14) d'un joint à godet (2) d'un tuyau (1) en matériau plastique et de contrôle simultané du positionnement correct dudit joint d'étanchéité principal (5) en utilisant le système selon les revendications précédentes 1 à 7, comprenant une étape d'insertion du joint d'étanchéité principal (5), réalisée en même temps qu'une étape de contrôle du positionnement correct dudit joint d'étanchéité principal (5), cette dernière étape étant réalisée en contrôlant la présence d'une pression prédéfinie dans une chambre fermée appropriée (17) créée pendant le cycle d'insertion du joint et bordée par l'autre joint d'étanchéité relatif (10) de la première prise (7) agissant sur la paroi intérieure d'une section du tuyau (1) par le joint d'étanchéité principal (5), par la paroi intérieure du tuyau et du godet placés entre eux et par les prises (7) et (9) connectées par une tige centrale (11).

9. Procédé selon la revendication 8, dans lequel l'étape de contrôle du positionnement correct dudit joint d'étanchéité principal (5) est réalisée en apportant de l'air dans ladite chambre fermée (17) depuis un trou (18) de la tige centrale (11) qui connecte et supporte les deux prises (7, 9) à un débit prédéterminé et pendant un temps prédéterminé.

10. Procédé selon la revendication 9, dans lequel ladite étape d'insertion du joint d'étanchéité principal (5) comprend les stades suivants :
- blocage du tuyau (1) et positionnement, coaxialement par rapport à celui-ci, du joint d'étanchéité principal (5) face au bord du godet (2) ;
- introduction dans le tuyau (1) de la première prise (7) prévue avec ledit autre joint d'étanchéité relatif (10) apte à former un joint sur le diamètre intérieur du tuyau (1) lui-même, par un mouvement rectiligne approprié orienté dans le sens du tuyau à godet et passant dans le joint d'étanchéité principal (5) précédemment positionné ;
- insertion du joint d'étanchéité principal (5) dans le siège (14) du godet par un mouvement rectiligne axial à l'intérieur d'un manchon cylindrique (6) dans le sens du tuyau à godet par un appendice approprié (22) de l'autre manipulateur (8) apte à attraper une partie de sa section circonférentielle ;
- déplacement axial de la seconde prise (9) qui est de forme cylindrique et coaxiale au tuyau dans le sens du tuyau à godet, depuis une position extérieure d'origine, de manière à l'insérer par sa surface extérieure de diamètre approprié dans le joint d'étanchéité principal (5) déterminant, si celui-ci est correctement positionné, son étanchéité par rapport la surface extérieure du siège (14) du godet (2) et complétant ainsi la fermeture de la chambre (17).
